# EUROPÄISCHE PATENTSCHRIFT

(11) **EP 0 764 490 B1**
(45) Veröffentlichungstag und Bekanntmachung des Hinweises auf die Patenterteilung: **20.01.1999**
(21) Anmeldenummer: 96114063.9
(22) Anmeldetag: 03.09.1996
(51) Int. Cl.: B23B 23/02, B23B 33/00

(54) **Stirnseitenmitnehmer für Werkzeugmaschinen**
Face driver for a machine tool
Pointeau de centrage

(30) Priorität: 14.09.1995 DE 19534073
(43) Veröffentlichungstag der Anmeldung: 26.03.1997
(73) Patentinhaber: Karl Bruckner GmbH, Präzisionswerkzeugfabrik, 71384 Weinstadt (DE)
(72) Erfinder: Bruckner, Karl, 73614 Schorndorf (DE)
(74) Vertreter: KOHLER SCHMID + PARTNER

(56) Entgegenhaltungen:
- CH-A- 379 221
- DE-A- 2 741 777
- DE-A- 2 840 184

## Beschreibung

Die Erfindung bezieht sich auf einen Stirnseitenmitnehmer für Werkzeugmaschinen, an dessen Schaft konzentrisch um die Zentrierspitze angeordnete axial verschiebbare Mitnehmer vorgesehen sind, welche sich auf einem Ausgleichselement, vorzugsweise einer Pfanne mit einem darin gelagerten Pendelring abstützen. Beim Ansetzen eines Werkstückes wird die federnd gelagerte Zentrierspitze in axialer Richtung zurückgeschoben, bis die Mitnehmer an der Stirnseite des Werkstückes angreifen. Durch die Abstützung der Mitnehmer auf einem Ausgleichselement, insbesondere auf einem in einer Pfanne gelagerten Pendelring, können Unregelmäßigkeiten des Werkstückes an der Mitnehmerfläche selbsttätig ausgeglichen werden. Das Ausgleichselement, gegegebenenfalls der Pendelring, stellt aber einen relativ festen Anschlag für die Mitnehmer dar, so daß deren sehr empfindlichen Schneiden leicht ausbrechen oder nur geringe Standzeiten haben. Zur Beseitigung dieses Nachteiles hat man anstelle eines Ausgleichselements mit Pendelring eine hydraulische Lösung verwendet, welche jedoch in der Herstellung sehr teuer ist. Bei einer anderen ebenfalls bekannten Konstruktion wird anstelle des Pendel rings eine plastische Masse benutzt, welche jedoch wiederum den Nachteil hat, daß durch die Elastizität der Masse der Weg des einzelnen Mitnehmers nicht mehr genau definierbar ist. Die Aufgabe der vorliegenden Erfindung ist es nunmehr, bei einem Stirnseitenmitnehmer der eingangs beschriebenen Art, wie er beispielsweise aus der DE-A-28 40 184 bekannt ist, trotz eines mechanischer Ausgleiches der Mitnehmer durch ein Ausgleichselement ein relativ weiches Anlegen des Werkstückes zu erreichen.

Zur Lösung dieser Aufgabe ist bei einem Stirnseiten mit nehmer der eingangs genannten Art erfindungsgemäß zwischen der Pfanne des Pendelrings bzw. zwischen dem Ausgleichselement und dem maschinenseitigen Ende des Schaftes ein Dämpfungsglied vorgesehen. Die gegenseitige Verschiebung der Mitnehmer erfolgt mit der gleichen Genauigkeit wie bei den bekannten Vorrichtungen mit Pendelring, jedoch ergibt sich beim Ansetzen des Werkstückes durch das Dämpfungsglied ein elastisches Auffangen des Stoßes, so daß die Schneiden der Mitnehmer geschont werden und eine erheblich längere Standzeit haben. Durch das Dämpfungsglied ebenfalls elastisch aufgefangen werden Schwingungen und Stöße, die an dem Werkstück während der Bearbeitung auftreten. Auch dies bedingt eine Verlängerung der Standzeiten der Mitnehmerschneiden. Gleichzeitig wird durch die elastische Aufnahme von Schwingungen und Stößen während der Werkstückbearbeitung auch das an dem Werkstück angesetzte Drehwerkzeug, insbesondere dessen Schneide, geschont.

Nach einem weiteren Merkmal der Erfindung ist die Pfanne ringförmig ausgebildet und stützt sich am Schaft ab, wobei das Dämpfungsglied zwischen dem Schaft und der Pfanne angeordnet ist. Vorzugsweise ist dabei am Schaft ein kreisförmiger Absatz zur Aufnahme des Dämpfungsgliedes vorgesehen.

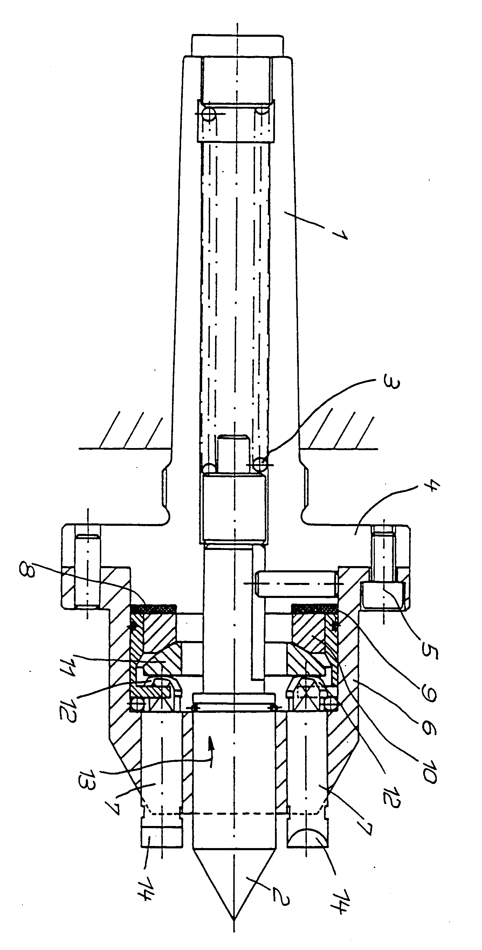

Die Zeichnung zeigt ein Ausführungsbeispiel der Erfindung und zwar einen Längsschnitt durch einen Stirnseitenmitnehmer.

Im Schaft 1 ist die Zentrierspitze 2 gegen die Kraft einer Feder 3 längsverschiebbar gelagert. Der Schaft 1 ist an seinem spitzenseitigen Ende mit einem Flansch 4 versehen, welcher durch Schraubverbindungen 5 mit eine Kappe 6 verbunden ist. In dieser sind die Spitze 2 sowie die Mitnehmer 7 axial verschiebbar gelagert.

Der Flansch 4 des Schaftes 1 weist einen ringförmigen Absatz 8 auf, in dem ein ebenfalls ringförmiges Dämpfungsglied 9 angeordnet ist. Auf diesem Dämpfungsglied 9 stützt sich eine Pfanne 10 ab, in welcher der Pendelring 11 gleitend gelagert ist. Am Pendelring 11 liegen dann die hinteren Enden 12 der Mitnehmer 7 an.

Wenn nunmehr ein nicht dargestelltes Werkstück an der Spitze 2 angesetzt wird, wird diese in Pfeilrichtung 13 zurückgestoßen, bis das Werkstück an den Schneiden 14 der Mitnehmer 7 anliegt. Je nach der Oberflächenbeschaffenheit des Werkstückes wird darin der eine oder der andere der Mitnehmer 7 in Pfeilrichtung 13 geschoben, wobei der Aufstoß durch das Dämpfungsglied 9 elastisch abgefangen wird. Der Pendelring 11 wird dann so verschoben, daß er den anderen Mitnehmer 7 in Richtung zum Werkstück bewegt, bis beide Schneiden 14 der Mitnehmer 7 am Werkstück so angreifen, daß eine sichere Mitnahme bei der Drehung erreicht wird.

## Patentansprüche

1. Stirnseitenmitnehmer für Werkzeugmaschinen an dessen Schaft konzentrisch um die Zentrierspitze (2) angeordnete axial verschiebbare Mitnehmer (14) vorgesehen sind, welche sich auf einem Ausgleichselement, (10) in Form einer Pfanne (10) mit einem darin gelagerten Pendelring (11) abstützen, dadurch gekennzeichnet, daß zwischen der Pfanne (10) und dem maschinenseitigen Ende des Schaftes (1) ein Dämpfungsglied (9) vorgesehen ist.

2. Stirnseitenmitnehmer nach Anspruch 1 dadurch gekennzeichnet, daß die Pfanne (10) ringförmig ausgebildet ist und sich am Schaft (1) abstützt, wobei das Dämpfungsglied (9) zwischen dem Schaft (1) und der Pfanne (10) angeordnet ist.

3. Stirnseitenmitnehmer nach einem oder beiden der vorhergehenden Ansprüche 1 oder 2, dadurch gekennzeichnet, daß am Schaft (1) ein ringförmiger Absatz (8) zur Aufnahme des Dämpfungsgliedes (9) vorgesehen ist.

## Claims

1. Face driver for machine tools, on the shank of which are provided axially displaceable drivers (14) which are arranged concentrically around the centre-point (2) and which are supported on a compensating element (10) in the form of a socket (10) having a floating ring (11) supported therein, characterised in that a damping member (9) is provided between the socket (10) and the machine end of the shank (1).

2. Face driver according to claim 1, characterised in that the socket (10) is annular and is supported on the shank (1), the damping member (9) being arranged between the shank (1) and the socket (10).

3. Face driver according to either or both of the preceding claims 1 and 2, characterised in that an annular shoulder (8) for accommodating the damping member (9) is provided on the shank (1).

## Revendications

1. Toc d'entraînement frontal pour machines-outils, sur la tige duquel sont prévus des tocs d'entraînement (14) mobiles axialement et disposés de façon concentrique autour du pointeau de centrage (2), qui prennent appui sur un élément compensateur (10) ayant la forme d'un coussinet (10) dans lequel est logée une bague flottante (11), caractérisé en ce qu'entre le coussinet (10) et l'extrémité de la tige (1) située du côté de la machine est prévu un élément d'amortissement (9).

2. Toc d'entraînement frontal selon la revendication 1, caractérisé en ce que le coussinet (10) est réalisé en forme d'anneau et prend appui sur la tige (1), sachant que l'élément d'amortissement (9) est placé entre la tige (1) et le coussinet (10).

3. Toc d'entraînement frontal selon l'une des deux ou les deux revendications précédentes, caractérisé en ce qu'est prévu un décrochement annulaire (8) destiné à recevoir l'élément d'amortissement (9).
